(19) Europäisches Patentamt / European Patent Office / Office européen des brevets

(11) **EP 2 213 710 B1**

(12) **EUROPEAN PATENT SPECIFICATION**

(45) Date of publication and mention
of the grant of the patent:
**19.07.2017 Bulletin 2017/29**

(51) Int Cl.:
**C09K 5/04** *(2006.01)*     **F24D 3/18** *(2006.01)*
**F24D 11/02** *(2006.01)*     **F25B 9/00** *(2006.01)*

(21) Application number: **10150401.7**

(22) Date of filing: **11.01.2010**

(54) **Liquid circulation heating system**

Flüssigkeitsumlaufheizung

Système de chauffage de circulation liquide

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **30.01.2009 JP 2009019234
25.09.2009 JP 2009221135**

(43) Date of publication of application:
**04.08.2010 Bulletin 2010/31**

(73) Proprietor: **Panasonic Corporation
Kadoma-shi
Osaka 571-8501 (JP)**

(72) Inventors:
• **Nakatani, Kazuo
Osaka 540-6207 (JP)**
• **Isayama, Yasuhiko
Osaka 540-6207 (JP)**

(74) Representative: **Eisenführ Speiser
Patentanwälte Rechtsanwälte PartGmbB
Johannes-Brahms-Platz 1
20355 Hamburg (DE)**

(56) References cited:
EP-A1- 1 162 419       WO-A1-2006/054804
WO-A1-2009/116282     US-A- 4 412 581
US-A1- 2006 243 945    US-A1- 2008 314 073

**Description**

The present invention relates to a liquid circulation heating system for performing air-heating using a liquid.

Conventionally, there has been known a liquid circulation heating system for producing hot water by a boiler or an electric heater and performing air-heating using the hot water produced. In recent years, the use of a heat pump capable of producing hot water with high efficiency has been considered as an alternative heat source to a boiler and an electric heater. For example, JP 2008-39306 A proposes a liquid circulation heating system for producing hot water by a heat pump and storing the produced hot water in a hot water storage tank. In this liquid circulation heating system, the hot water stored in the hot water storage tank is fed to, for example, a heating radiator placed indoors to radiate its heat, and then returned to the hot water storage tank.

The heat pump has a heat pump circuit for circulating a refrigerant. The heat pump circuit includes, for example, a compressor, a radiator, an expansion valve, and an evaporator, which are connected by pipes. Heat is exchanged between a refrigerant and water in the radiator so as to heat the water, and thereby hot water is produced.

From the viewpoint of preventing global warming, it is desired to use a refrigerant having a low global warming potential (hereinafter referred to as a "GWP") as a refrigerant to be filled in the heat pump circuit. Recently, low GWP refrigerants such as 2,3,3,3-tetrafluoropropene (HFO-1234yf) have been developed. For example, JP 2007-315663 A discloses a refrigeration cycle apparatus in which a refrigerant containing HFO-1234yf and trifluoroiodomethane ($CF_3I$) is used.

HFO-1234yf is, however, not suitable for use in heat pumps because of its low heating capability as a heating refrigerant, although it has a low GWP. On The other hand, $CF_3I$ does not act as a refrigerant. Therefore, in JP 2007-315663 A, $CF_3I$ presumably is added to HFO-1234yf in order to stabilize HFO-1234yf.

WO 2009/116282, which has been published on 24 September 2009, describes a refrigeration apparatus including a refrigeration circuit in which a refrigerant is circulated. In one embodiment, a refrigerant mixture of HFC-1234yf and HFC-32 is used.

US 4,412,581 relates to a heating installation that includes several radiators. In a supply line to the radiators, there is a water circulating pump and in the return line, there is a liquefier of a heat pump which heats the water circulating through the radiators.

US 2006/243945 describes refrigerant compositions for use in heat-pump systems.

US 2008/314073 discloses a system for detecting a league of a heat transfer composition in a closed loop heat transfer system. The described heat transfer compositions include mixtures of HFC-1234yf, HFC-32 and HFC-125 (55/16/29 wt%).

It is an object of the present invention to provide a liquid circulation heating system having less impact on global warming.

The present invention provides a liquid circulation heating system for performing air-heating by heating a liquid to produce a heated liquid and releasing heat of the heated liquid from a heating radiator. This system includes a heat pump circuit for circulating a refrigerant to heat the liquid, a heating radiator for releasing heat of the heated liquid. The heat pump circuit includes: a compressor for compressing the refrigerant; a refrigerant radiator for radiating heat from the compressed refrigerant; an expansion valve for expanding the refrigerant that has radiated heat; and an evaporator for evaporating the expanded refrigerant. The liquid circulation heating system further comprises an accumulator provided between the evaporator and the compressor, and the refrigerant contains tetrafluoropropene and difluoromethane as main components. The system further comprises a controller 26 for performing a control operation to reduce an opening of the expansion valve 23 when the incoming liquid supplied to the refrigerant radiator 22 has a relatively high temperature. The present invention makes it possible to obtain a liquid circulation heating system having less impact on global warming.

FIG. 1 is a schematic configuration diagram of a liquid circulation heating system according to a first embodiment of the present invention.

FIG. 2 is a Mollier diagram of a heat pump.

FIG. 3 is a graph showing a relationship between the content of difluoromethane in a mixed refrigerant of HFO-1234yf and difluoromethane and the ratio of the heating capacity of a heat pump when using the mixed refrigerant with respect to that when using a HFO-1234yf refrigerant, as well as a relationship between the content of difluoromethane and the GWP of the mixed refrigerant.

FIG. 4 is a graph showing a relationship between the content of difluoromethane in the mixed refrigerant of HFO-1234yf and difluoromethane and the high pressure at which water of 65°C is heated to 70°C, as well as a relationship between the content of difluoromethane and the GWP of the mixed refrigerant.

FIG. 5 is a schematic configuration diagram of a liquid circulation heating system according to a second embodiment of the present invention.

FIG. 6 is a schematic configuration diagram of a liquid circulation heating system according to a third embodiment of the present invention.

FIG. 7 is a schematic configuration diagram of a heat pump of a modification.

FIG. 8 is a schematic configuration diagram of a heat pump of another modification.

Hereinafter, embodiments of the present invention will be described with reference to the accompanying drawings. It should be noted, however, that the embodiments described below are merely examples of the present invention, and should not be construed to limit the scope of the present invention.

(First Embodiment)

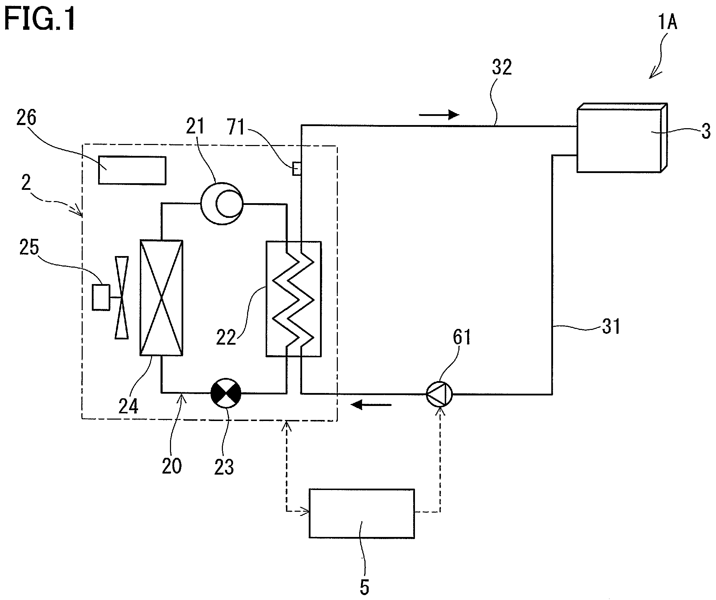

FIG. 1 shows a liquid circulation heating system 1A according to a first embodiment of the present invention. This liquid circulation heating system 1A heats a liquid to produce a heated liquid, releases heat of the heated liquid from a heating radiator 3, and thereby performs air-heating, for example, in a room. Specifically, the liquid circulation heating system 1A includes the heating radiator 3, a heat pump 2 for producing the heated liquid, and an overall controller 5 for controlling the entire system.

In the present embodiment, the heating radiator 3 is connected directly to the heat pump 2 by a supply pipe 31 and a recovery pipe 32 to be described later, so that the liquid flows without stopping. As the liquid, for example, an antifreeze liquid containing propylene glycol or the like dissolved in water can be used, but water is preferably used because it is available at low cost and in large quantities. The following description will be made on the assumption that the liquid is water and the heated liquid is hot water.

The heat pump 2 has a heat pump circuit 20 for circulating a refrigerant. This heat pump circuit 20 includes a compressor 21 for compressing the refrigerant, a radiator (refrigerant radiator) 22 for radiating heat from the compressed refrigerant, an expansion valve 23 for expanding the refrigerant that has radiated heat, and an evaporator 24 for evaporating the expanded refrigerant. These components 21 to 24 are connected in series by pipes. The heat pump 2 includes a heat pump controller 26 for controlling the compressor 21 and the expansion valve 23 according to an instruction from the overall controller 5. An expander for recovering power from the expanding refrigerant also can be used instead of the expansion valve 23.

In the radiator 22, heat is exchanged between the refrigerant and the water flowing through the radiator 22 so as to heat the water, and thereby hot water is produced. In the evaporator 24, heat is exchanged between the refrigerant and air blown by a fan 25, and thereby the refrigerant absorbs heat. The refrigerant will be described later in detail.

The heating radiator 3 is a device for radiating heat from hot water flowing therethrough, and has an inlet for allowing the hot water to flow thereinto, and an outlet for allowing the hot water that has radiated its heat to flow therefrom. As the heating radiator 3, for example, a radiator to be placed in a room of a building may be used. A hot water panel to be laid on a floor also may be used.

The outlet of the heating radiator 3 is connected to the radiator 22 by the supply pipe 31 for supplying water to the radiator 22. The inlet of the heating radiator 3 is connected to the radiator 22 by the recovery pipe 32 for recovering hot water produced in the radiator 22. The supply pipe 31 is provided with a pump 61, and the recovery pipe 32 is provided with a hot water temperature sensor 71 for detecting the temperature of the hot water produced in the radiator 22. When the pump 61 is rotated, the water is guided from the heating radiator 3 to the radiator 22 by the supply pipe 31, and the hot water produced in the radiator 22 is guided from the radiator 22 to the heating radiator 3 by the recovery pipe 32.

The overall controller 5 includes a microcomputer, a digital signal processor (DSP), or the like, and is connected to the above-mentioned heat pump controller 26, the hot water temperature sensor 71, and the pump 61, respectively. When a user turns on a heating switch (not shown), the overall controller 5 rotates the pump 61 and sends an operation start signal to the heat pump controller 26. Thereby, water is heated in the radiator 22 to produce hot water, and the produced hot water is fed to the heating radiator 3. Thus, air-heating is performed. The overall controller 5 controls the rotational rate of the pump 61 to regulate the flow rate of the water flowing through the supply pipe 31 so that the temperature of the water detected by the hot water temperature sensor 71 becomes a predetermined temperature (for example, 70°C).

In the liquid circulation heating system 1A having such a configuration, the hot water produced can be used directly for air-heating. Therefore, heat radiation loss is reduced, and as a result, energy conservation can be achieved.

Next, the refrigerant used in the heat pump 2 will be described in detail.

The refrigerant used in the present embodiment contains tetrafluoropropene and difluoromethane (R32) as main components. The phrase "... contains tetrafluoropropene and difluoromethane as main components" means that the total content of tetrafluoropropene and difluoromethane is at least 80% by mass and their respective contents are at least 10% by mass.

Examples of the tetrafluoropropene includes 2,3,3,3-tetrafluoropropene (HFO-1234yf) and 1,3,3,3-tetrafluoropropene (HFO-1234ze).

Difluoromethane has a high heating capability as a heating refrigerant. By adding an appropriate amount of difluoromethane to tetrafluoropropene, the heating performance of the refrigerant for heat pumps can be enhanced. From the viewpoint of enhancing the heating performance further, the content of difluoromethane in the refrigerant preferably is at least 20% by mass. More preferably, the content of difluoromethane is at least 25% by mass, still more particularly at least 30% by mass, particularly preferably at least 35% by mass, and especially preferably at least 40% by mass.

The heating capacity Q [w] of the heat pump 2 is calculated by the following formula:

$$Q = G_R \times \Delta h$$

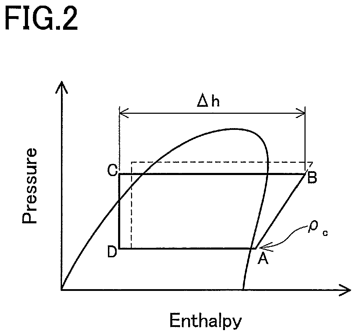

where $G_R$ is an amount of the refrigerant circulating in the heat pump circuit 20, and $\Delta h$ is an enthalpy difference between Point B and Point C (i.e., the high pressure side of the refrigeration cycle) in the Mollier diagram of FIG. 2. The circulation amount of the refrigerant is the product of the volumetric capacity V of the compressor 21 and the density $\rho_c$ of the refrigerant at Point A (i.e., the refrigerant to be drawn into the compressor 21) in the Mollier diagram of FIG. 2. Accordingly, even when a refrigerant having a low heating capability is used, it is possible to achieve the heating capacity Q comparable to that obtained when using a refrigerant having a high heating capability, if the circulation amount $G_R$ of the refrigerant is increased, for example, by increasing the rotational rate of the compressor 21 or increasing the volumetric capacity of the compressor 21.

Nevertheless, if the heating capability of a refrigerant to be used is high enough to allow the heat pump to achieve a heating capacity Q comparable to that obtained when using a conventional refrigerant under the same conditions, conventional equipment can be used without modification. For example, in order to achieve a heating capacity Q comparable to that obtained when using R407C, which is one of major refrigerants for heat pumps, under the same conditions, the content of difluoromethane in the refrigerant preferably is 26 to 34% by mass, and more preferably 28 to 32% by mass.

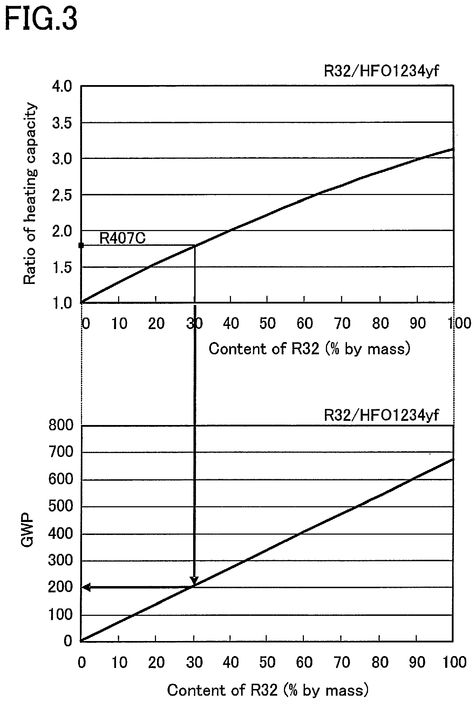

For example, FIG. 3 shows a relationship between the content of difluoromethane in a mixed refrigerant of HFO-1234yf and difluoromethane and the ratio of the heating capacity of a heat pump when using the mixed refrigerant with respect to that when using a HFO-1234yf refrigerant, as well as a relationship between the content of difluoromethane and the GWP of the mixed refrigerant. As shown in FIG. 3, in order to achieve a heating capacity Q comparable to that obtained when using R407C under the same conditions, the content of difluoromethane in the refrigerant preferably is at least 30% by mass. In this case, the GWP of the refrigerant is 200 or more.

On the other hand, the GWP of difluoromethane itself is 675, which is not so high, but when difluoromethane is added to tetrafluoroethane, the GWP of the resulting mixed refrigerant increases in proportion to the content of difluoromethane. Therefore, from the viewpoint of obtaining a mixed refrigerant having a low GWP, the content of difluoromethane preferably is at most 80% by mass. More preferably, the content of difluoromethane is at most 75% by mass, still more preferably at most 70% by mass, particularly preferably at most 65% by mass, and especially preferably at most 60% by mass.

In the liquid circulation heating system 1A shown in FIG. 1, when the flow rate of the hot water fed to the heating radiator 3 is high (for example, when a panel heater in which a large amount of hot water flows is used as the heating radiator 3), the temperature of the water that flows from the heating radiator 3 presumably does not drop so much. In this case, the temperature of the water supplied to the radiator 22 rises. When the temperature of the water (hereinafter referred to as an "incoming water temperature") supplied to the radiator 22 rises, the high pressure of the refrigeration cycle increases, as shown by a dotted line in FIG. 2. For example, in the case where only difluoromethane is used as a refrigerant, when the incoming water temperature rises to 65°C during the process of producing hot water of 70°C, the high pressure of the refrigeration cycle increases to about 5 MPa.

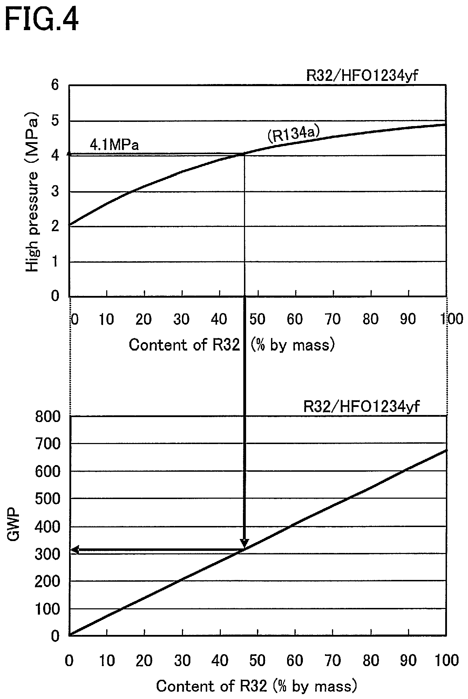

However, in a conventional compressor for R410A, which is one of the refrigerants commonly used in heat pumps, the upper limit of the pressure is set to approximately 4.1 MPa to ensure the normal operation thereof. Therefore, in order to use such a conventional compressor for R410A, the high pressure preferably is 4.1 MPa or less to heat the water of 65°C to 70°C. In order to achieve this pressure level, the content of difluoromethane preferably is at most 47% by mass, and more preferably at most 45% by mass. This can be confirmed from FIG. 4 showing the relationship between the content of difluoromethane in a mixed refrigerant of HFO-1234yf and difluoromethane and the high pressure at which water of 65°C is heated to 70°C, as well as the relationship between the content of difluoromethane and the GWP of the mixed refrigerant. It should be noted that in FIG. 4, the high pressure is calculated by using R134a, which presumably has a heating capability comparable to that of HFO-1234yf. When the content of difluoromethane in the refrigerant is 47% by mass or less, the GWP of the refrigerant is about 310 or less.

The refrigerant further may contain pentafluoroethane (R125). Both tetrafluoropropene and difluoromethane are flammable materials. Therefore, the addition of pentafluoroethane having an effect of suppressing flammability to these materials renders a resulting mixed refrigerant flame-retardant. However, since the GWP of pentafluoroethane is 3500, which is a considerably high value, the content of pentafluoroethane in the mixed refrigerant preferably is at most 10% by mass. More preferably, the content of pentafluoroethane is at most 7% by mass, and still more preferably at most 5% by mass.

The heating capability of pentafluoroethane as a heating refrigerant is only slightly inferior to that of difluoromethane. Therefore, when pentafluoroethane is added, the content of difluoromethane may be reduced by the amount of pentafluoroethane to be added.

The above-mentioned refrigerant is filled in the heat pump circuit 20, together with a refrigerating machine oil. It is preferable to use, as a refrigerating machine oil, a synthetic oil containing, as a main component, an oxygen-containing compound selected from polyoxyalkylene glycols, polyvinyl ethers, copolymers of polyvinyl ethers and polyoxyalkylene glycols or monoethers thereof, polyol esters, polycarbonates, or a synthetic oil containing, as a main component, a compound selected from alkylbenzenes and $\alpha$-olefines. When a synthetic oil containing an oxygen-containing compound as a main component is used among these synthetic oils, the compatibility with the above-mentioned refrigerant is relatively high, and the return of oil to the compressor can be ensured. Thus, the reliability of the heat pump is enhanced. Even if a synthetic oil containing, as a main component, a compound selected from alkylbenzenes and $\alpha$-olefines, which have poor compatibility with the above refrigerant, is used, the return of oil can be ensured by the optimal design of the pipe diameter, or the like.

(Second Embodiment)

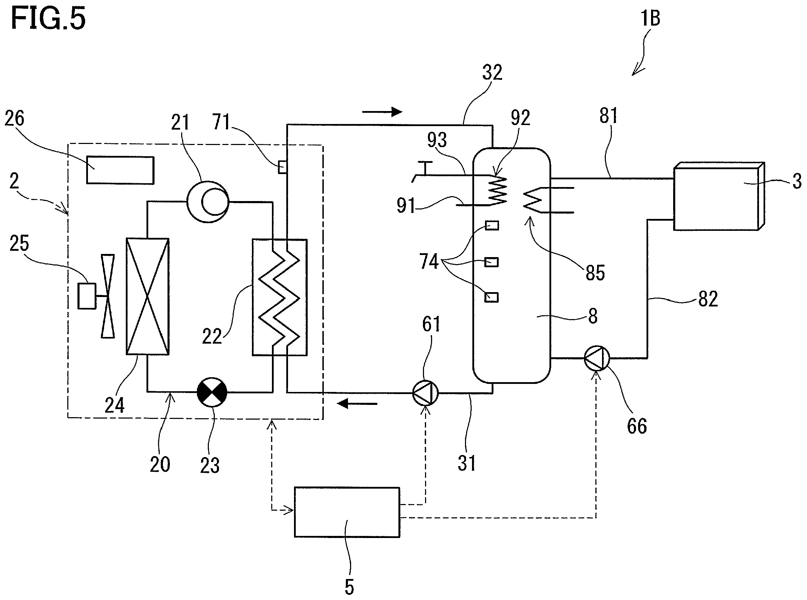

FIG. 5 shows a liquid circulation heating system 1B according to a second embodiment of the present invention. In the present embodiment, the same components as those in the first embodiment are designated by the same reference numerals and no further description is given.

The liquid circulation heating system 1B of the second embodiment has the same configuration as the liquid circulation heating system 1A of the first embodiment, except that the heating radiator 3 and the radiator 22 are connected via the hot water storage tank 8.

Furthermore, as a refrigerant for the heat pump 2, the same refrigerant as that described in the first embodiment also can be used in the present embodiment, and therefore the description of the refrigerant is not repeated here. The same description also is not repeated in the following embodiment and modifications.

The hot water storage tank 8 is a vertically cylindrical closed casing and is filled with water. The lower portion of the hot water storage tank 8 is connected to the radiator 22 by the supply pipe 31, and the upper portion thereof is connected to the radiator 22 by the recovery pipe 32.

When the pump 61 is rotated, the water is guided from the lower portion of the hot water storage tank 8 to the radiator 22 by the supply pipe 31, and the hot water produced in the radiator 22 is guided from the radiator 22 to the upper portion of the hot water storage tank 8 by the recovery pipe 32. Thereby, the produced hot water is stored in the hot water storage tank 8 from the top thereof. On the peripheral surface of the hot water storage tank 8, hot water temperature sensors 74 for determining how much hot water remains in the tank 8 are provided separately from each other in the vertical direction. The hot water temperature sensors 74 are connected to the overall controller 5.

In the present embodiment, a heat exchanger 92 for hot water supply is provided at an upper position in the hot water storage tank 8, and a water inlet pipe 91 and a hot water outlet pipe 93 are connected to this heat exchanger 92. That is, in the present embodiment, the produced hot water can be used as a heat source for hot water supply. In addition, a heater 85 for re-heating the hot water also is provided at an upper position in the hot water storage tank 8.

The inlet of the heating radiator 3 is connected to the upper portion of the hot water storage tank 8 by a feed pipe 81, and the outlet of the heating radiator 3 is connected to the lower portion of the hot water storage tank 8 by a return pipe 82. In the present embodiment, a circulation pump 66 is provided in the return pipe 82, but the circulation pump 66 may be provided in the feed pipe 81. The circulation pump 66 is connected to the overall controller 5. When the circulation pump 66 is rotated, the hot water stored in the hot water storage tank 8 is fed to the heating radiator 3 through the feed pipe 81, and the hot water is returned to the hot water storage tank 8 through the return pipe 82 after radiating heat in the heating radiator 3.

Next, the control performed by the overall controller 5 is described specifically.

(Hot water storage operation)

When the overall controller 5 determines that the amount of hot water remaining in the tank is less than the required amount based on the temperature detected by the hot water temperature sensors 74, for example, during nighttime hours (for example, from 23:00 to 7:00), it rotates the pump 61, and sends an operation start signal to the heat pump controller 26. Thereby, water is heated in the radiator 22 to produce hot water, and the produced hot water is stored in the hot water storage tank 8. The overall controller 5 also controls the rotational rate of the pump 61 to regulate the flow rate of the water flowing through the supply pipe 31 so that the temperature of the water detected by the hot water temperature sensor 71 becomes a predetermined temperature (for example, 70°C).

(Heating operation)

When a user turns on a heating switch (not shown), the overall controller 5 rotates the circulation pump 66. Thereby, the hot water stored in the hot water storage tank 8 is fed to the heating radiator 3, where heat is radiated from the hot water. Thus, air-heating is performed.

In the liquid circulation heating system 1B of the second embodiment described above, high-temperature hot water stored in the hot water storage tank 8 can be fed to the heating radiator 3 even during the early stage of heating operation. Therefore, air-heating can be started immediately after the heating switch is turned on.

(Third Embodiment)

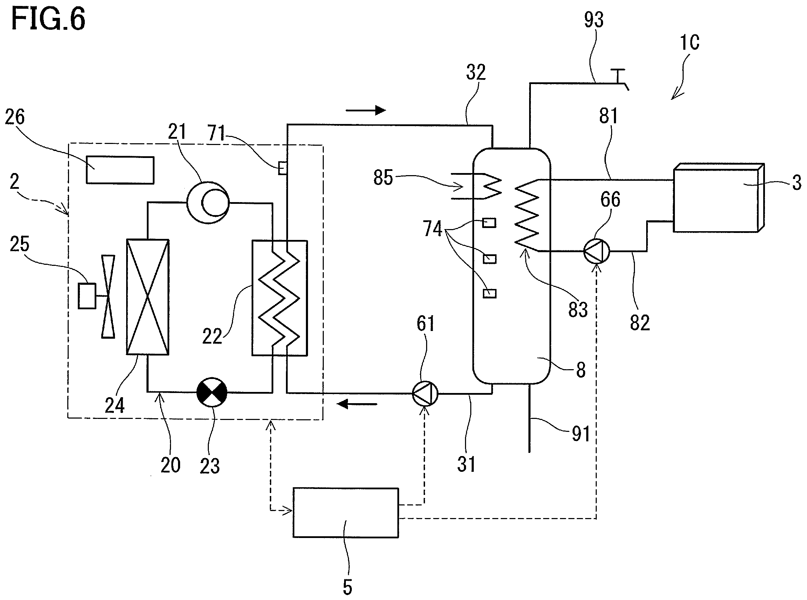

FIG. 6 shows a liquid circulation heating system 1C according to a third embodiment of the present invention. In the present embodiment, the same components as those in the first and second embodiments are designated by the same reference numerals and no further description is given.

In the liquid circulation heating system 1C of the third embodiment, hot water stored in the hot water storage tank 8 can be used directly for hot water supply. Specifically, the water inlet pipe 91 is connected to the lower portion of the hot water storage tank 8, and the hot water outlet pipe 93 is connected to the upper portion of the hot water storage tank 8. At an upper position in the hot water storage tank 8, a heat exchanger 83 for exchanging heat between the hot water stored in the hot water storage tank 8 and a heat transfer liquid (secondary liquid) is provided. The heat exchanger 83 is connected to the heating radiator 3 by the feed pipe 81 and the return pipe 82. When the circulation pump 66 is rotated, the heat transfer liquid heated in the heat exchanger 83 is fed to the heating radiator 3 through the feed pipe 81, and the heat transfer liquid is returned to the heat exchanger 83 through the return pipe 82 after radiating heat in the heating radiator 3 As a heat transfer liquid, for example, an antifreeze liquid can be used, but water preferably is used because it is available at low cost and in large quantities.

Since the overall controller 5 performs control in the same manner as in the second embodiment, the description thereof is not repeated here. It should be noted, however, that during the heating operation, the heat transfer liquid that has exchanged heat with the hot water stored in the hot water storage tank 8 radiates heat, that is, the heat of the hot water is transferred to the heating radiator 3 by the heat transfer liquid, and thereby air-heating is performed.

In the liquid circulation heating system 1C having such a configuration, the temperature in the lower portion of the hot water storage tank 8 can be kept low because of the water supplied from the water inlet pipe 91. Therefore, the low-temperature water can be supplied to the radiator 22, and thus the efficiency of the heat pump 2 can be enhanced.

(Modifications)

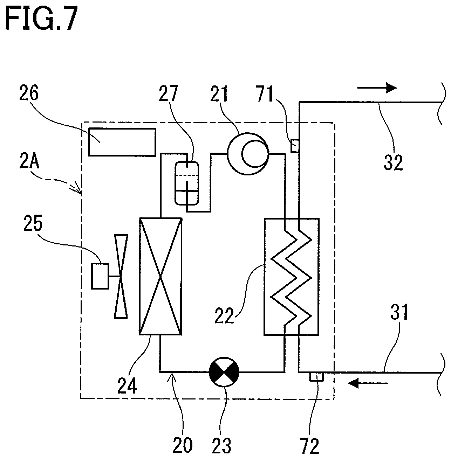

In each of the above embodiments, a heat pump 2A as shown in FIG. 7 can be employed. In this heat pump 2A, an accumulator 27 is provided between the evaporator 24 and the compressor 21 in the heat pump circuit 20. In the supply pipe 31, an incoming water temperature sensor 72 for detecting the temperature of water (incoming water temperature) to be supplied to the radiator 22 is provided.

A gas-liquid two phase refrigerant is fed from the evaporator 24 to the accumulator 27. This refrigerant is a zeotropic refrigerant mixture of tetrafluoropropene having a relatively high boiling point and difluoromethane having a relatively low boiling point. Therefore, a tetrafluoropropene-rich liquid pool is formed in the bottom of the accumulator 27.

When the temperature detected by the incoming water temperature sensor 72 is relatively high, the heat pump controller 26 reduces the opening of the expansion valve 23. Thereby, the refrigerant absorbs heat efficiently in the evaporator 24, and the amount of liquid-phase refrigerant fed to the accumulator 27 decreases, and the liquid pool in the accumulator 27 decreases accordingly. As a result, the content of tetrafluoropropene in the refrigerant circulating through the heat pump circuit 20 increases and the high pressure of the refrigeration cycle drops.

A receiver, instead of the accumulator 27, may be provided between the radiator 22 and the expansion valve 23. In this case, when the incoming water temperature is high, the high pressure of the refrigeration cycle can be reduced using the same control as described above.

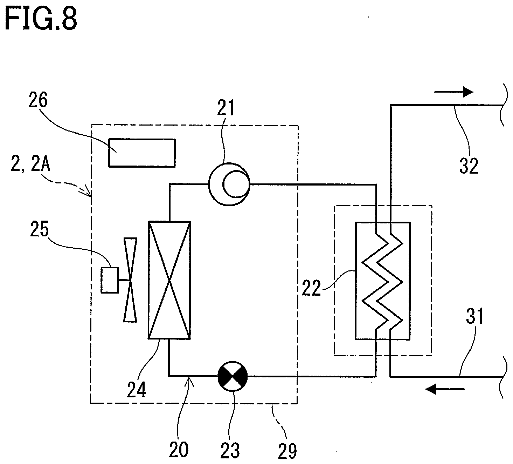

In each of the above embodiments and modifications, the radiator 22 is placed in the heat pump 2 or 2A, but the radiator 22 may be placed as a separate member from the main body 29, as shown in FIG. 8. With such a configuration, it is possible to place the radiator 22 indoors, for example, to prevent water from freezing in or around the radiator 22.

## Claims

1. A liquid circulation heating system for performing air-heating, the system comprising
   a heat pump circuit (2) for circulating a refrigerant to heat the liquid, and
   a heating radiator (3) for releasing heat of the heated liquid,
   wherein the heat pump circuit (2) includes: a compressor (21) for compressing the refrigerant; a refrigerant radiator (22) for radiating heat from the compressed refrigerant; an expansion valve (23) for expanding the refrigerant that has radiated heat; and an evaporator (24) for evaporating the expanded refrigerant;
   an accumulator (27) provided between the evaporator (24) and the compressor (21),
   the refrigerant contains tetrafluoropropene and difluoromethane as main components, and
   the system further comprises a controller (26) for performing a control operation to reduce an opening of the expansion valve (23) when the incoming liquid supplied to the refrigerant radiator (22) has a relatively high temperature.

2. The liquid circulation heating system according to claim 1, wherein the content of difluoromethane in the refrigerant is at least 20% by mass.

3. The liquid circulation heating system according to claim 1, wherein the content of difluoromethane in the refrigerant is at most 80% by mass.

**4.** The liquid circulation heating system according to claim 1, wherein the refrigerant further contains pentafluoroethane.

**5.** The liquid circulation heating system according to claim 4, wherein the content of pentafluoroethane in the refrigerant is at most 10% by mass.

**6.** The liquid circulation heating system according to claim 1, wherein the heat pump circuit (2) is filled with the refrigerant and a refrigerating machine oil, and the refrigerating machine oil is: a synthetic oil containing, as a main component, an oxygen-containing compound selected from polyoxyalkylene glycols, polyvinyl ethers, copolymers of polyvinyl ethers and polyoxyalkylene glycols or monoethers thereof, polyol esters, and polycarbonates; or a synthetic oil containing, as a main component, a compound selected from alkylbenzenes and a-olefines.

**7.** The liquid circulation heating system according to claim 1, wherein the heat pump circuit (2) has a refrigerant radiator (22) for radiating heat from the refrigerant and heating the liquid to produce the heated liquid, and the liquid circulation heating system further comprises:

a supply pipe (31) for guiding the liquid from the heating radiator (3) to the refrigerant radiator (22); and
a recovery pipe (32) for guiding the heated liquid from the refrigerant radiator (22) to the heating radiator (3).

**8.** The liquid circulation heating system according to claim 1, wherein the heat pump circuit (22) has a refrigerant radiator (22) for radiating heat from the refrigerant and heating the liquid to produce the heated liquid, and the liquid circulation heating system further comprises:

a tank (8) for storing the produced heated liquid;
a supply pipe (31) for guiding the liquid from a lower portion of the tank (8) to the refrigerant radiator (22);
a recovery pipe (32) for guiding the heated liquid from the refrigerant radiator (22) to an upper portion of the tank 8(9;
a feed pipe (81) for feeding the heated liquid stored in the tank (8) to the heating radiator (3); and
a return pipe (82) for returning the heated liquid to the tank (8) after the heated liquid radiates heat in the heating radiator (3).

**9.** The liquid circulation heating system according to claim 1, wherein the heat pump circuit (2) has a refrigerant radiator (22) for radiating heat from the refrigerant and heating the liquid to produce the heated liquid, and the liquid circulation heating system further comprises:

a tank (8) for storing the produced heated liquid;
a supply pipe (31) for guiding the liquid from a lower portion of the tank (8) to the refrigerant radiator (22);
a recovery pipe (32) for guiding the heated liquid from the refrigerant radiator (22) to an upper portion of the tank (8);
a heat exchanger (92), disposed in the tank (8), for exchanging heat between the heated liquid stored in the tank (8) and a heat transfer liquid;
a feed pipe (81) for feeding the heat transfer liquid to the heating radiator (3) after the heat transfer liquid is heated in the heat exchanger (92); and
a return pipe (82) for returning the heat transfer liquid to the heat exchanger (92) after the heat transfer liquid radiates heat in the heating radiator (3).

**10.** The liquid circulation heating system according to claim 1, wherein the liquid is water, and the heated liquid is hot water.

**Patentansprüche**

**1.** Flüssigkeitszirkulationsheizsystem zum Ausführen einer Lufterwärmung, wobei das System Folgendes umfasst:

einen Wärmepumpenkreislauf (2) zum Zirkulieren eines Kältemittels, um die Flüssigkeit zu erwärmen, und
einen Heizkörper (3) zum Freigeben von Wärme der erwärmten Flüssigkeit,
wobei der Wärmepumpenkreislauf (2) Folgendes aufweist: einen Kompressor (21) zum Komprimieren des Kältemittels; einen Kältemittelkühler (22) zum Abstrahlen von Wärme von dem komprimierten Kältemittel; ein Expansionsventil (23) zum Expandieren des Kältemittels, das Wärme abgestrahlt hat; und einen Verdampfer (24) zum Verdampfen des expandierten Kältemittels;
einen zwischen dem Verdampfer (24) und dem Kompressor (21) vorgesehenen Akkumulator (27),
wobei das Kältemittel Tetrafluorpropen und Difluormethan als Hauptkomponenten enthält, und
das System ferner eine Steuerung (26) zum Durchführen einer Steueroperation umfasst, um eine Öffnung des Expansionsventils (23) zu reduzieren, wenn die einströmende Flüssigkeit, die dem Kältemittelkühler (22) zugeführt wird, eine relativ hohe Temperatur aufweist.

2. Flüssigkeitszirkulationsheizsystem nach Anspruch 1, wobei der Gehalt an Difluormethan in dem Kältemittel mindestens 20 Massen-% beträgt.

3. Flüssigkeitszirkulationsheizsystem nach Anspruch 1, wobei der Gehalt an Difluormethan in dem Kältemittel höchstens 80 Massen-% beträgt.

4. Flüssigkeitszirkulationsheizsystem nach Anspruch 1, wobei das Kältemittel ferner Pentafluorethan enthält.

5. Flüssigkeitszirkulationsheizsystem nach Anspruch 4, wobei der Gehalt an Pentafluorethan in dem Kältemittel höchstens 10 Massen-% beträgt.

6. Flüssigkeitszirkulationsheizsystem nach Anspruch 1, wobei der Wärmepumpenkreislauf (2) mit dem Kältemittel und einem Kältemaschinenöl gefüllt ist, und das Kältemaschinenöl eines von folgenden ist: ein synthetisches Öl, das als eine Hauptkomponente eine Sauerstoff enthaltende Verbindung enthält, ausgewählt aus Polyoxyalkylenglykolen, Polyvinylethern, Copolymeren von Polyvinylethern und Polyoxyalkylenglykole oder Monoether davon, Polyolester und Polycarbonate; oder ein synthetisches Öl, das als eine Hauptkomponente eine Verbindung enthält, die ausgewählt ist aus Alkylbenzolen und a-Olefinen.

7. Flüssigkeitszirkulationsheizsystem nach Anspruch 1, wobei der Wärmepumpenkreislauf (2) einen Kältemittelkühler (22) aufweist, zum Abstrahlen von Wärme aus dem Kältemittel und zum Erwärmen der Flüssigkeit zum Erzeugen der erwärmten Flüssigkeit, und das Flüssigkeitszirkulationsheizsystem ferner umfasst:

ein Zuleitungsrohr (31) zum Führen der Flüssigkeit von dem Heizkörper (3) zu dem Kältemittelkühler (22); und
ein Rückführungsrohr (32) zum Führen der erwärmten Flüssigkeit aus dem Kältemittelkühler (22) zu dem Heizkörper (3).

8. Flüssigkeitszirkulationsheizsystem nach Anspruch 1, wobei der Wärmepumpenkreislauf (2) einen Kältemittelkühler (22) aufweist, zum Abstrahlen von Wärme aus dem Kältemittel und zum Erwärmen der Flüssigkeit zum Erzeugen der erwärmten Flüssigkeit, und das Flüssigkeitszirkulationsheizsystem ferner umfasst:

einen Tank (8) zum Speichern der erzeugten erwärmten Flüssigkeit;

ein Zuleitungsrohr (31) zum Führen der Flüssigkeit von einem unteren Teil des Tanks (8) zu dem Kältemittelkühler (22);
ein Rückführungsrohr (32) zum Führen der erwärmten Flüssigkeit aus dem Kältemittelkühler (22) zu einem oberen Teil des Tanks (8);
eine Zuführungsrohr (81) zum Zuführen der in dem Tank (8) gespeicherten erwärmten Flüssigkeit zu dem Heizkörper (3); und
ein Rücklaufrohr (82) zum Rückführen der erwärmten Flüssigkeit zu dem Tank (8), nachdem die erwärmte Flüssigkeit Wärme in dem Heizkörper (3) abstrahlt.

9. Flüssigkeitszirkulationsheizsystem nach Anspruch 1, wobei der Wärmepumpenkreislauf (2) einen Kältemittelkühler (22) aufweist, zum Abstrahlen von Wärme aus dem Kältemittel und zum Erwärmen der Flüssigkeit zum Erzeugen der erwärmten Flüssigkeit, und das Flüssigkeitszirkulationsheizsystem ferner umfasst:

einen Tank (8) zum Speichern der erzeugten erwärmten Flüssigkeit;
ein Zuleitungsrohr (31) zum Führen der Flüssigkeit von einem unteren Teil des Tanks (8) zu dem Kältemittelkühler (22);
ein Rückführungsrohr (32) zum Führen der erwärmten Flüssigkeit aus dem Kältemittelkühler (22) zu einem oberen Teil des Tanks (8);
einen in dem Tank (8) angeordneten Wärmetauscher (92) zum Austauschen von Wärme zwischen der erwärmten Flüssigkeit, die in dem Tank (8) gespeichert wird, und einer Wärmeübertragungsflüssigkeit;
ein Zuführungsrohr (81) zum Zuführen der Wärmeübertragungsflüssigkeit zu dem Heizkühler (3), nachdem die Wärmeübertragungsflüssigkeit in dem Wärmetauscher (92) erwärmt wird; und
ein Rücklaufrohr (82) zum Rückführen der Wärmeübertragungsflüssigkeit zu dem Wärmetauscher (92), nachdem die Wärmeübertragungsflüssigkeit Wärme in dem Heizkörper (3) abstrahlt.

10. Flüssigkeitszirkulationsheizsystem nach Anspruch 1, wobei die Flüssigkeit Wasser ist und die erwärmte Flüssigkeit heißes Wasser ist.

**Revendications**

1. Système de chauffage à circulation de liquide pour effectuer un chauffage d'air, le système comprenant:

un circuit de pompe à chaleur (2) pour faire circuler un réfrigérant afin de chauffer le liquide, et

un radiateur de chauffage (3) pour libérer de la chaleur du liquide chauffé,

dans lequel ledit circuit de pompe à chaleur (2) comprend: un compresseur (21) pour comprimer le réfrigérant; un radiateur de réfrigérant (22) pour émettre de la chaleur provenant du réfrigérant comprimé; une valve d'expansion (23) pour faire détendre le réfrigérant qui a émis de la chaleur; et un évaporateur (24) pour faire évaporer le réfrigérant détendu;

un accumulateur (27) prévu entre l'évaporateur (24) et le compresseur (21),

dans lequel le réfrigérant contient du tétrafluoropropène et du difluorométhane en tant que composants principaux, et

le système comprend en outre une commande (26) pour mettre en oeuvre une opération de commande afin de réduire une ouverture de ladite valve d'expansion (23) lorsque le liquide entrant qui est amené au radiateur de réfrigérant (22) présente une température relativement élevée.

**2.** Système de chauffage à circulation de liquide selon la revendication 1, dans lequel la teneur en difluorométhane dans le réfrigérant est d'au moins 20 % en masse.

**3.** Système de chauffage à circulation de liquide selon la revendication 1, dans lequel la teneur en difluorométhane dans le réfrigérant est de 80 % en masse tout au plus.

**4.** Système de chauffage à circulation de liquide selon la revendication 1, dans lequel le réfrigérant contient en outre du pentafluoroéthane.

**5.** Système de chauffage à circulation de liquide selon la revendication 4, dans lequel la teneur en pentafluoroéthane dans le réfrigérant est de 10 % en masse tout au plus.

**6.** Système de chauffage à circulation de liquide selon la revendication 1, dans lequel le circuit de pompe à chaleur (2) est rempli dudit réfrigérant et d'une huile de machine frigorifique, et l'huile de machine frigorifique est: une huile synthétique contenant, comme un composant principal, un composé contenant de l'oxygène choisi parmi les polyoxyalkylèneglycols, les éthers polyvinyliques, les copolymères d'éthers polyvinyliques et de polyoxyalkylèneglycols ou leurs monoéthers, les esters de polyol et les polycarbonates; ou une huile synthétique contenant, comme un composant principal, un composé choisi parmi les alkylbenzènes et les α-oléfines.

**7.** Système de chauffage à circulation de liquide selon la revendication 1, dans lequel le circuit de pompe à chaleur (2) comprend un radiateur de réfrigérant (22) pour émettre de la chaleur provenant du réfrigérant et pour chauffer le liquide afin de produire le liquide chauffé, et le système de chauffage à circulation de liquide comprend en outre:

un tuyau d'alimentation (31) pour guider le liquide depuis le radiateur de chauffage (3) vers le radiateur de réfrigérant (22); et
un tuyau de récupération (32) pour guider le liquide chauffé depuis le radiateur de réfrigérant (22) vers le radiateur de chauffage (3).

**8.** Système de chauffage à circulation de liquide selon la revendication 1, dans lequel le circuit de pompe à chaleur (2) comprend un radiateur de réfrigérant (22) pour émettre de la chaleur provenant du réfrigérant et pour chauffer le liquide afin de produire le liquide chauffé, et le système de chauffage à circulation de liquide comprend en outre:

un réservoir (8) pour stocker le liquide chauffé produit;
un tuyau d'alimentation (31) pour guider le liquide depuis une partie inférieure du réservoir (8) vers le radiateur de réfrigérant (22);
un tuyau de récupération (32) pour guider le liquide chauffé depuis le radiateur de réfrigérant (22) vers une partie supérieure du réservoir (8);
un tuyau d'alimentation (81) pour amener le liquide chauffé stocké dans le réservoir (8) au radiateur de chauffage (3); et
un tuyau de retour (82) pour renvoyer le liquide chauffé au réservoir (8) après que le liquide chauffé émet de la chaleur dans le radiateur de chauffage (3).

**9.** Système de chauffage à circulation de liquide selon la revendication 1, dans lequel le circuit de pompe à chaleur (2) comprend un radiateur de réfrigérant (22) pour émettre de la chaleur provenant du réfrigérant et pour chauffer le liquide afin de produire le liquide chauffé, et le système de chauffage à circulation de liquide comprend en outre:

un réservoir (8) pour stocker le liquide chauffé produit;
un tuyau d'alimentation (31) pour amener le liquide depuis une partie inférieure du réservoir (8) au radiateur de réfrigérant (22);
un tuyau de récupération (32) pour guider le liquide chauffé depuis le radiateur de réfrigérant (22) vers une partie supérieure du réservoir (8);
un échangeur de chaleur (92) disposé dans le réservoir (8) et destiné à échanger de la chaleur entre le liquide chauffé stocké dans le réservoir (8) et un liquide de transfert de chaleur;
un tuyau d'alimentation (81) pour amener le liquide de transfert de chaleur au radiateur de chauffage (3) après que le liquide de transfert de chaleur est chauffé dans l'échangeur de chaleur (92); et

un tuyau de retour (82) pour renvoyer le liquide de transfert de chaleur à l'échangeur de chaleur (92) après que le liquide de transfert de chaleur émet de la chaleur dans le radiateur de chauffage (3).

10. Système de chauffage à circulation de liquide selon la revendication 1, dans lequel le liquide est de l'eau, et le liquide chauffé est de l'eau chaude.

FIG.1

FIG.2

# FIG.3

# FIG.4

# FIG.5

EP 2 213 710 B1

EP 2 213 710 B1

FIG.6

# FIG.7

# FIG.8

**EP 2 213 710 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008039306 A
- JP 2007315663 A
- WO 2009116282 A
- US 4412581 A
- US 2006243945 A
- US 2008314073 A